# FASCICULE DE BREVET EUROPEEN

(11) **EP 0 403 323 B1**
(45) Date de publication et mention de la délivrance du brevet: **30.03.1994**
(21) Numéro de dépôt: 90401354.7
(22) Date de dépôt: 22.05.1990
(51) Int. Cl.: A01K 39/014

(54) **Collerette amovible pour bac d'alimentation animale**
Abnehmbarer Kragen für Tierfutterbehälter
Detachable collar for animal feed container

(30) Priorité: 22.05.1989 FR 8906628
(43) Date de publication de la demande: 19.12.1990
(73) Titulaire: GAEC DU TRIANGLE (GROUPEMENT AGRICOLE D'EXPLOITATION EN COMMUN), F-41100 Vendome (FR)
(72) Inventeur: Deshayes Gilles, Bernard, F-41100 Vendome (FR)
(74) Mandataire: Viard, Jean

(56) Documents cités:
- DE-C- 564 262
- FR-A- 2 514 994
- GB-A- 245 984
- GB-A- 2 053 646

## Description

La présente invention a pour objet une collerette amovible destinée en particulier, mais non exclusivement, à être montée sur un bac d'alimentation animale, notamment en aviculture, pour la nourriture d'animaux en batterie.

Les nécessités de la production ont conduit à des élevages industriels de volailles dans lesquels l'alimentation de celle-ci se fait au moyen de bacs de forme générale circulaire à l'intérieur desquels sont introduits des aliments de natures diverses. Les volailles viennent picorer à l'intérieur de ces bacs. Mais pour des raisons physiologiques, on a constaté qu'une partie des aliments tombaient sur le sol avant ingestion. Cette proportion atteint en moyenne 5% de la quantité globale et il en résulte pour les éleveurs une perte considérable. En fait, avant d'ingérer les aliments, les volailles écrasent ceux-ci dans leur bec et c'est à ce moment qu'une partie des aliments tombe sur le sol.

Des mangeoires destinées aux volailles ou oiseaux sont déjà connus.

DE-C - 564 262 décrit une mangeoire dont le bac contenant les graines est surmonté par une couronne ou collerette destinée à protéger les aliments. Le rebord supérieur de la collerette est rabattu vers l'intérieur.

GB-A-2 053 646 (servant de base pour le préambule de la revendication 1) décrit également une mangeoire dans laquelle les grains se trouvant dans le bac sont protégés par une bande inclinée de bas en haut vers le centre du bac, cette bande étant munie d'ouvertures pour le passage des becs des oiseaux. Cette bande peut être montée sur le bac puis fermée par encliquetage.

Mais ces mangeoires ne résolvent pas le problème des pertes par chute à terre des graines lors de l'écrasement dans le bec de l'oiseau.

Les collerettes ou bandes ne peuvent pas être utilisées sur des récipients de dimensions différentes.

La présente invention a pour objet de pallier cet inconvénient et d'éviter les pertes mentionnées ci-dessus.

Selon la présente invention, la collerette amovible notamment pour bac d'alimentation animale, constituée par une longueur de profilé replié sur lui-même en forme de cercle et dont ses extrémités portent des moyens de fixation, est caractérisée en ce que les extrémités se superposent, en ce que le profilé a une section en "L" dont la petite branche est prévue pour être insérée à l'intérieur du bac et dont la grande branche est prévue pour faire saillie vers l'extérieur du bac en position inclinée de bas en haut et en ce que les extrémités portent des moyens de fixation réglables coopérant l'un avec l'autre pour pouvoir adapter la collerette aux dimensions variables des bacs d'alimentation animale.

Il est ainsi possible d'adapter, sur un récipient de forme générale cylindrique ou tronconique, une collerette selon l'invention qui évite pratiquement les pertes signalées.

Selon une autre caractéristique de l'invention, la collerette est constituée par une matière plastique injectée telle que du polyéthylène ou du polypropylène.

Selon encore une autre caractéristique de l'invention, les extrémités de la collerette sont enclipsables.

Ainsi, la souplesse de la matière plastique permet l'adaptation de la collerette sur des récipients dont les dimensions peuvent varier dans une certaine mesure, et l'enclipsage permet d'obtenir une bonne fixation de la collerette qui prend appui sur le bord supérieur du récipient.

D'autres caractéristiques et avantages de l'invention apparaît au cours de la description qui va suivre des modes de réalisation particuliers, donnés uniquement à titre d'exemples non limitatifs, en regard des figures qui représentent :
- La figure 1, une vue en perspective d'un bac d'alimentation ;
- La figure 2, une vue par-dessus d'une collerette selon l'invention ;
- Les figures 3 et 4, des sections transversales de la collerette dans deux formes de réalisation;
- La figure 5, une vue par dessous d'une collerette selon un autre mode de réalisation;
- La figure 6 une vue de la même collerette en coupe selon la figure VI-VI de la figure 5;
- Les figures 7 et 8, dans les mêmes conditions, une collerette de plus faible largeur.

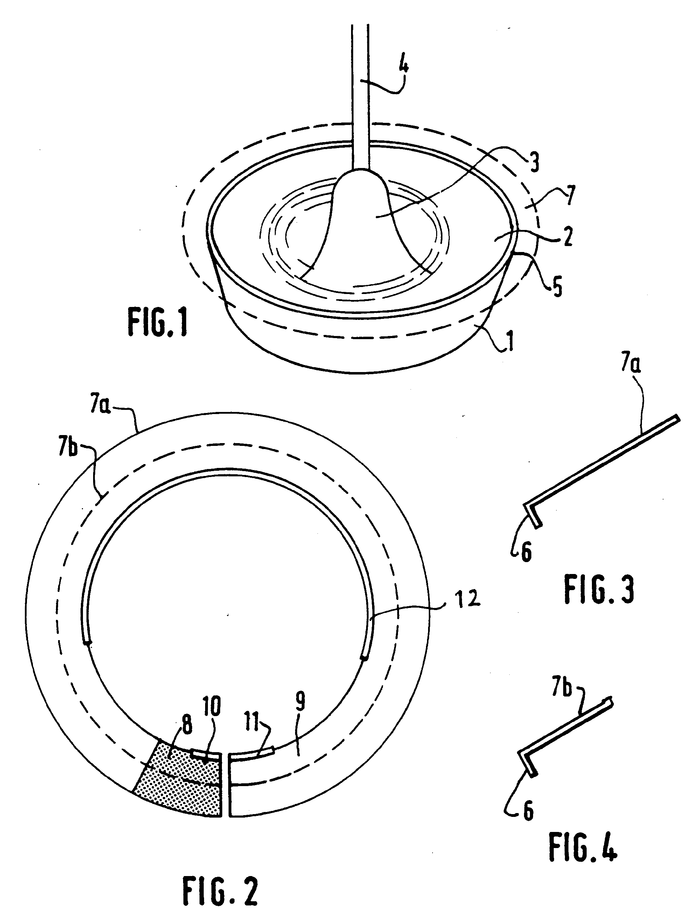

Sur la figure 1, est représenté un bac d'alimentation de forme générale cylindrique. Le corps 1 du récipient est creux et peut recevoir, dans une gouttière 2, définie d'une part par la paroi externe du récipient et d'autre part, par un cône 3, les aliments destinés aux volailles. Le cône 3 est habituellement relié à une canalisation 4 permettant d'introduire automatiquement une quantité déterminée d'aliments dans le bac 1. On a représenté en trait pointillé une collerette 7 posée sur le bord 5 du récipient 1.

Comme cela apparaît sur les figures 3 et 4, la collerette comporte un bord 6 qui vient s'appliquer contre la paroi interne supérieure du récipient 1. En fonction de l'âge des animaux à nourrir, la collerette peut présenter une largeur de 4 centimètres par exemple pour les petits animaux et de 8,5 centimètres par exemple pour les animaux plus âgés. En effet, le débattement du cou varie avec l'âge et une collerette telle que celle représentée sur la figure 3 constituerait une gêne pour les petits animaux.

La figure 2 représente en vue par-dessus, en traits pleins, une grande collerette 7a, et, en traits pointillés, une petite collerette 7b telles que celles qui sont représentées en coupe transversale sur les figures 3 et 4.

Comme cela apparaît sur la figure 2, la collerette 7 comporte deux extrémités 8 et 9 portant respectivement des moyens de fixation complémentaires et réglables. Il est possible de fixer l'extrémité 8 au-dessous de l'extrémité 9. Il est également possible de prévoir, sur l'une des deux extrémités, un élément mâle pénétrant dans un élément femelle porté par l'autre extrémité. De préférence, un bourrelet ou cordon de rigidité 12 s'étend sur un secteur du cercle intérieur de la collerette et, par exemple sur un angle de 240°. Le bourrelet 12 subsiste en 10 et 11 aux extrémités de la collerette 7.

Les extrémités 8 et 9 présentent sur leurs faces, respectivement inférieure et supérieure, une granité assurant un contact par simple pression. Dans l'exemple représenté, des pattes 10 et 11 peuvent également constituer un moyen d'accrochage.

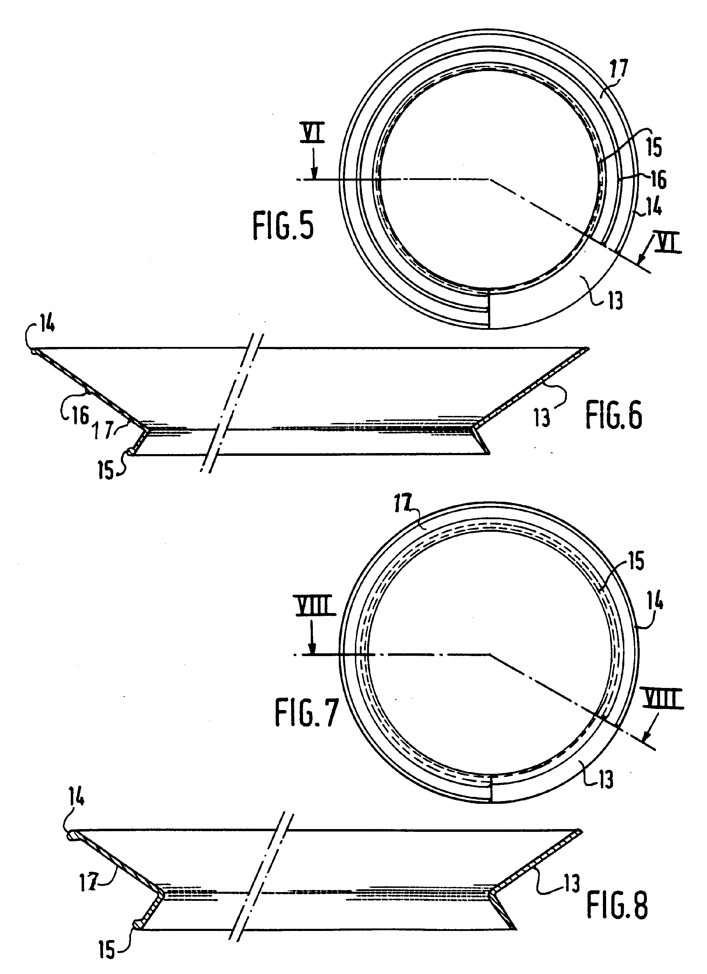

Les figures 5 et 6 représentent un autre mode de réalisation respectivement en vue par dessous et en coupe verticale.

Sur la figure 6, on voit que la collerette présente deux parties respectivement 13 et 17 dont les extrémités peuvent se superposer de manière à ce que la longueur de la collerette repliée sur elle-même corresponde au périmètre de l'ouverture du récipient. Dans ce cas, les deux extrémités de la collerette peuvent être bloquées par une pince.

Comme cela apparaît sur le figure 5, la partie 17 inclut trois nervures ou joncs respectivement supérieure 14, médiane 16 et inférieure 15 qui accroissent la rigidité et permettent un maintien convenable de la partie inférieure à l'intérieur de l'ouverture du récipient.

Les figures 7 et 8 représentent, dans les mêmes conditions une collerette de hauteur réduite par rapport à la hauteur de la collerette représentée sur les figures 5 et 6.

La partie 17 comporte seulement deux joncs 14 et 15 en haut et en bas. Ces joncs facilitent le blocage de l'extrémité 13 dans le profilé 17, les deux profilés étant sensiblement en forme de "L".

Grâce à la possibilité de recouvrement de ses deux extrémités, la collerette peut ainsi s'adapter aux dimensions variables des récipients qui sont couramment utilisés pour la nourriture des animaux en aviculture.

## Revendications

1. Collerette amovible pour bac d'alimentation animale, constituée par une longueur de profilé replié sur lui-même en forme de cercle et dont les extrémités portent des moyens de fixation, caractérisée en ce que les extrémités se superposent, en ce que le profilé a une section en "L" dont la petite branche est prévue pour être insérée à l'intérieur du bac et dont la grande branche est prévue pour faire saillie vers l'extérieur du bac en position inclinée de bas en haut et en ce que les extrémités (8, 9) portent des moyens de fixation réglables coopérant l'un avec l'autre pour pouvoir adapter la collerette aux dimensions variables des bacs d'alimentation animale.

2. Collerette selon la revendication 1, caractérisée en ce qu'elle est constituée en une matière plastique souple telle que du polyéthylène et du polypropylène.

3. Collerette selon l'une des revendications 1 ou 2, caractérisée en ce que les extrémités (8 et 9) de la collerette comprennent des moyens (10 et 11) d'accrochage.

4. Collerette selon l'une quelconque des revendications précédentes, caractérisée en ce qu'un bourrelet (12) s'étend sur une partie de la circonférence interne.

5. Collerette selon la revendication 1, caractérisée en ce qu'elle présente sur une partie (17) de sa longueur au moins deux nervures (14, 15, 16) réparties sur sa surface externe pour en accroître la rigidité, l'autre partie (13) étant lisse.

## Patentansprüche

1. Abnehmbarer Kragen für Tierfutterbehälter mit einem abgekanteten kreisförmigen Längenprofil, dessen Enden mit Befestigungsmitteln versehen sind,
dadurch gekennzeichnet,
daß die Enden (8, 9) einander überlappen, daß das Längenprofil einen L-förmigen Querschnitt hat, dessen kleiner Schenkel zum Einführen ins Innere des Behälters vorgesehen ist und dessen großer Schenkel dann gegen das Äußere des Behälters in einem von unten nach oben ansteigenden Verlauf vorspringt, und daß die Enden (8, 9) verstellbare Befestigungsmittel tragen, durch deren Zusammenwirken der Kragen an Tierfutterbehälter mit unterschiedlichen Abmessungen anpaßbar ist.

2. Kragen nach Anspruch 1, dadurch gekennzeichnet, daß der Kragen aus einem biegsamen Plastikmaterial wie Polyäthylen oder Polypropylen besteht.

3. Kragen nach Anspruch 1 oder 2, dadurch gekennzeichnet, daß die Enden (8, 9) des Kragens mit Haftmitteln (10, 11) versehen sind.

4. Kragen nach einem der Ansprüche 1 bis 3, dadurch gekennzeichnet, daß sich ein Wulst (12) auf einem Teil des inneren Umfangs des Kragens erstreckt.

5. Kragen nach Anspruch 1, dadurch gekennzeichnet, daß der Kragen auf einem Teil (17) seiner Längserstreckung wenigstens zwei auf seiner Außenseite verlaufende und zum Verstärken seiner Steifigkeit dienende Rippen (14, 15, 16) aufweist, während ein anderer Teil (13) glatt belassen ist.

## Claims

1. A removable collar, particularly for an animal feeding box, constituted by an elongate section member looped back on itself to form a circle and whose ends carry securing means, characterized in that its ends are superposed, in that the section is L-shaped, the small limb of the L-shape is designed to be inserted inside the box and the large limb of the L-shape is provided to protrude outwards and upwards from the box, and in that the ends (8, 9) carry adjustable securing means cooperating with one another so as to enable the collar to be adapted to animal feeding boxes of different dimensions.

2. A collar according to claim 1, characterized in that it is constituted by a flexible plastics material such as polyethylene or polypropylene.

3. A collar according to either of claims 1 or 2, characterized in that the ends (8, 9) of the collar comprise fastening means (10, 11).

4. A collar according to any one of the preceding claims, characterized in that a bead (12) extends over a portion of the internal circumference.

5. A collar according to claim 1, characterized in that it has over a portion (17) of its length at least two ribs (14, 15, 16) distributed over its outside surface to increase its strength, the other portion (13) being smooth.
